Europäisches Patentamt

European Patent Office

Office européen des brevets

(11) Publication number: **0 349 662 B1**

## EUROPEAN PATENT SPECIFICATION

(45) Date of publication of patent specification: **28.09.94**  (51) Int. Cl.5: **B65D 81/24**, C09K 15/32, A23L 3/34

(21) Application number: **88110711.4**

(22) Date of filing: **05.07.88**

(54) **Material having a deoxidation function and sealed container.**

(43) Date of publication of application:
**10.01.90 Bulletin 90/02**

(45) Publication of the grant of the patent:
**28.09.94 Bulletin 94/39**

(84) Designated Contracting States:
**DE FR GB**

(56) References cited:
**EP-A- 0 206 343**
**EP-A- 0 221 549**
**EP-A- 0 223 567**

**DATABASE DERWENT WORLD PATENT IN-DEX, Derwent Publications Ltd., London, GB, accession No. 86-103438/16**

**DATABASE DERWENT WORLD PATENT IN-DEX, Derwent Publications Ltd., London, GB, accession No. 85-298689/48**

(73) Proprietor: **NIPPON STEEL CORPORATION**
**6-3 Otemachi 2-chome**
**Chiyoda-ku**
**Tokyo 100 (JP)**

Proprietor: **SUNTORY LIMITED**

1-40, Dojimahama 2-chome
Kita-ku, Osaka-shi, Osaka-fu 530 (JP)

(72) Inventor: **Maeda, Shigeyoshi c/o Nippon Steel Corporation**
**Daiichi Technology R&D Labs**
**1618, Ida**
**Nakahara-ku Kawasaki-shi Kanagawa-ken (JP)**
Inventor: **Asai, Tsunetoshi c/o Nippon Steel Corporation**
**Daiichi Technology R&D Labs**
**1618, Ida**
**Nakahara-ku Kawasaki-shi Kanagawa-ken (JP)**
Inventor: **Asano, Hidejiro c/o Nippon Steel Corporation**
**Daiichi Technology R&D Labs**
**5-10-1, Fuchinobe**
**Sagamihara-shi Kanagawa-ken (JP)**
Inventor: **Taguchi, Haruyoshi**
**3-17-401, Tomobuchi-cho**
**1-chome, Miyakojima-ku**
**Osaka (JP)**

EP 0 349 662 B1

(74) Representative: **VOSSIUS & PARTNER**
**Postfach 86 07 67**
**D-81634 München (DE)**

## Description

The present invention relates to a container material having a deoxidation function which can remove oxygen present in sealed containers to prevent changes in qualities and properties of foods and drinks contained in cans and sealed containers, and enable their long time storage, and also relates to a sealed container prepared using such a material. The term "sealed container" used in the present invention means all kinds of sealed containers, such as cans, bottles and capsules.

Some of foods, drinks or chemicals when brought into contact with oxygen in the air, are susceptible to putrefaction, denaturation or deterioration and as methods for preventing such, there have been hitherto practised, for example, to absorb and remove oxygen in the air contained in sealed containers by incorporating deoxidants (reductive organic compounds such as sulfoxylates and dithionates), capable of absorbing oxygen, either put in a permeable container or wrapped with a permeable film, together with foods, drinks or chemicals into the sealed containers.

Further, for sealed containers such as beer cans, juice cans or food cans a method of replacing oxygen present in the air in a head space or dissolved in contents of the sealed containers with inert gases such as nitrogen gas or carbon dioxide gas has also conventionally been practised. However, the method using deoxidants incorporated in the sealed containers directly or using permeable film wrapping encounters problems that as the deoxidants are contained together with the foods or drinks in sealed containers they must be separated from the foods or drinks and that heat generated due to vigorous oxidation of the deoxidants can be removed only with difficulty, which may produce adverse effects on the contents; therefore the actual situation is that none of the above conventional methods has been practically used for storage of liquid food and drink as well as chemicals. Further, the method using inert gas has been found to be unsatisfactory for removing oxygen dissolved in the contents.

If sealed containers per se were prepared from materials having a deoxidation function, there would be no necessity of separately preparing deoxidants and handling would be simple and deoxidation of the aforesaid liquid materials would become easy and thus, a useful deoxidation method would be provided.

EP-A-221 549 discloses an attempt to develop materials having a deoxidation function capable of achieving the aforesaid objects by providing a hydrophilic coating layer on the surface of a metallic base material Thereby deoxidation proceeds extremely rapidly without hindering oxidation of the base material.

Thus, EP-A-221 549 discloses materials having a deoxidation function, comprising a metallic base material reactive with oxygen and a hydrophilic coating layer and/or an oxygen-permeable coating layer formed on the surface of the base material.

The coating composition for forming the aforesaid oxygen- and moisture-permeable coating layer in accordance with EP-A-221 549 contains such resins that can form a coating capable of permeating oxygen and moisture and minimizing transfer of part of the coating-forming components which injure flavor of the contents when they are brought into contact with the contents in a sealed container, or can minimize permeation of metal ions, metal oxides, and metal hydroxides.

As resins for providing the aforesaid oxygen- and moisture-permeable coating layer in accordance with EP-A-221 549, there are known resins such as silicone resins, olefin resins, acryl resins, polyester resins, epoxy resins, polyamide resins, cellulose resins, etc. and, resins satisfying the property described above can be appropriately chosen from these resins. Among them, silicone resins are mentioned as being preferred since they generally have a large oxygen permeability and do not injure flavor of the can contents.

However, silicone resins suffer from the drawback that the paint coating film is susceptible to damages during the can lid working due to the poor workability of silicone coating so that there is much chance that iron dissolves from the container into a content of the container (iron pick-up phenomenon).

EP-A-0 206 343 discloses a sheet-like oxygen scavenger which can be coated with or wrapped in a film. The wrappers described in this document include a non-woven fabric, microporous film and sheet which is laminated with a plastic film wherein said plastic film should preferably be formed of polyethylene terephthalate/polyethylene, nylon/polyethylene or oriented polypropylene/polyethylene. Polymethylpentene is also mentioned as a possible component of a film, but it is not preferred and not used in any of the Examples of EP-A-0 206 343.

It has now surprisingly been found that especially favorable results with respect to deoxidation are achieved, when polymethylpentene is used for the oxygen-permeable coating layer of a material having deoxidation function according to EP-A-221 549. The coating layer produced from polymethylpentene has excellent workability and does not show the iron pick-up phenomenon.

The coating layer of polymethylpentene is excellent with respect to oxygen- and moisture-permeability and feasibility in can manufacture, and the resin can be applied in a film-like form by thermal-pressure deposition or by using a suitable adhesive.

The subject matter of the present invention therefore is a container material having deoxidation function said material comprising a metallic base material reactive with oxygen, a hydrophilic coating layer formed on the surface of said metallic base material and an oxygen and moisture-permeable coating layer formed on said hydrophilic coating layer, which is characterized in that said oxygen and moisture-permeable coating layer consists of polymethylpentene.

The base material on which the hydrophilic coating and the oxygen-permeable layer is formed for preparing the materials having a deoxidation function according to the present invention may be any metal readily reactive with oxygen, for example, iron, zinc and manganese or may be materials other than metals, such as a plastic film, cellophane, paper or glass having provided thereon a metallic thin layer of a metal readily reactive with oxygen, for example, iron, zinc or manganese either by a vacuum deposition method or with an adhesive.

As the metals used for the base material, ordinary steel sheets per se and surface-treated steel sheets conventionally used for cans, such as a tin-plated steel sheet, a nickel-plated steel sheet or a chrome-plated steel sheet may be used for preparing cans or containers for foods and drinks, e.g., beer, juice, and other edible substances. Those obtained by plating at least one of Fe, Zn and Mn on the surface of the surface-treated steel sheets described above in an extremely thin layer (0.5 to 20 mg/dm$^2$) are also preferred metallic materials in the present invention. The metallic base materials described above may further be chemically treated with, for example, phosphates or chromates. Aluminum sheet can also be used as the metallic base materials but due to a stable oxidized layer formed on the surface thereof, aluminum per se does not react with oxygen or, if any, oxidation occurs extremely slowly. Therefor aluminum sheet is preferably coated with metals such as Fe, Zn or Mn having oxygen absorbing ability.

Coating of Fe, Zn or Mn may be generally applied to the sheet surface corresponding to the inner surface of a can, but may also be performed on both surfaces, of course. It is necessary that the thickness (quantity) of the coating be enough to correspond to the quantity of oxygen contained in the contents of cans or sealed containers and accordingly, it varies depending upon the kind of contents and the wrapping (sealing) conditions.

In the case of, for example, a beer can of 350 mℓ (0.16 mℓ of $O_2$ in 24 mℓ of a head space), $O_2$ is consumed according to the following equation when taking the Fe coating as an example:

$$2Fe + 3/2O_2 + H_2O \longrightarrow Fe_2O_3 \cdot H_2O \qquad \dots \ (1)$$

$$0.16 \ m\ell \ \times \ \frac{4 \ \times \ 55.85 \ g}{3 \ \times \ 22,400 \ m\ell} = 0.53 \ mg \ Fe$$

Namely, approximately 0.5 mg of Fe is required.

Assuming this quantity is furnished by a lid (area of 32 cm$^2$) of the can, 1.5 mg/dm$^2$ (0.5 x 100/32) is required (A similar amount is required in cases of Zn and Mn coatings). Accordingly, for surface-treated steel sheets or materials obtained by plating Fe, Zn or Mn on an aluminum sheet, it is sufficient to provide a coating in an amount ranging from 0.2 to 20 mg/dm$^2$, preferably 0.5 to 10 mg/dm$^2$, depending on the quantity of $O_2$ present in food to be canned.

As another method for providing the Fe surface more easily, a steel sheet, on one side of which is tinplate, tin-free steel (chrome-plated steel sheet) or nickel-plated steel sheet may also be used.

In the present invention, there is no particular limitation with respect to the coating composition used for forming the hydrophilic coating layer on the surface of the metallic base material as long as it can form a hydrophilic coating, but it is preferred to use an aqueous solution having a solid content of approximately 0.1 to 20 wt% of water-soluble polymer used as a binder and dissolved in water. The coating is applied by ordinarly coating means, for example, spray coating, followed by natural drying or heat drying. The hydrophilic coating layer may be formed by coating the composition once or by repeating the coating twice or more with the same or different compositions. The thickness of the hydrophilic coating layer is generally in a range of 0.01 to 5 $\mu$m, preferably in a range of 0.05 to 1 $\mu$m. When the thickness of the coated layer is less than 0.01 $\mu$m, the desired oxygen absorbing ability is not obtained; on the other hand, when the thickness exceeds 5 $\mu$m, there are defects that rusts generate excessively, and waterproof or adhesion property is deteriorated.

4

The term "hydrophilic coating layer" as used in the present invention refers to a layer that is formed from a binder having a property of being capable of readily dissolving in or swelling with water at normal temperatures and itself has affinity to water.

The water-soluble polymer used in the aforesaid coating composition may be classified into natural, semisynthetic and synthetic polymers. Examples of natural polymers include starch, gelatin, casein and vegetable rubbers and non-volatile residues of natural drinks. Examples of semi-synthetic polymers include cellulose derivatives, for example, methyl cellulose, ethyl cellulose, carboxymethyl cellulose and hydroxyethyl cellulose. Examples of synthetic polymers include vinyl polymers such as polyvinyl alcohol, polyvinyl ether and polyvinyl pyrrolidone; homopolymers of hydroxyethyl acrylate, hydroxyethyl methacrylate, acrylic acid and methacrylic acid; copolymers of the aforesaid monomers with acrylic acid or methacrylic acid alkyl esters (e.g. methyl acrylate, ethyl acrylate, methyl methacrylate and ethyl methacrylate ), acrylic polymers such as polyacrylamide, and other water-soluble polymers such as polyethylene oxide.

Of the water-soluble polymers described above, cellulose derivatives, inter alia, hydroxyethyl cellulose are preferred polymers since they can impart an excellent oxygen absorbing ability to the base metals.

The coating composition constituting the hydrophilic coating layer exhibits its function sufficiently as far as it contains the aforesaid water-soluble polymer as a binder component, but in addition to the water-soluble polymer, water-soluble melamine resins, etc. may also be added to partially cross-link the coating composition within a range that does not damage the hydrophilic property.

The aforesaid hydrophilic coating layer may be applied to the entire surface of the metallic base material or, depending upon purposes, partly applied to, e.g., the lid or the bottom of a sealed container.

The materials having the hydrophilic coating layer have a very excellent oxygen absorbing ability; however, in case that the presence of rusts formed by reaction of the metals with oxygen and water might adversely affect the quality of, e.g., food or drink in a sealed container, such can be solved by providing an oxygen- and moisture-permeable coating layer further on the hydrophilic coating layer.

The composition for forming the oxygen- and moisture-permeable coating layer is made of polymethylpentene. In addition to the resin component the composition may also contain known pigments, fillers, plasticizers, etc. generally used in the field of paints, if necessary and desired. Particularly by admixing silver color pigments in the pigments, it is possible to shield rusts formed on the metallic surface. The coating composition may be either of organic solvent type or water-soluble type.

The thickness of the oxygen- and moisture-permeable coating layer, when formed on the hydrophilic coating layer, is generally in a range of 1 to 50 $\mu$m, preferably in a range of 5 to 10 $\mu$m.

In the present invention, with the hydrophilic coating layer formed on the surface of the metallic material, the oxidation reaction between the oxygen and the metal is accelerated by the presence of water to markedly increase the oxygen absorbing ability, for reasons to be still theoretically clarified. Further the oxygen- and moisture permeable coating layer formed on the hydrophilic coating layer, effects of rusts (iron oxide) formed by the oxidation on the quality of substances to be stored can be avoided without lowering the oxygen absorbing ability.

Thus, the materials having a deoxidation function of the present invention can be worked into sealed containers which are conventionally made of metals, non-metallic materials such as plastics, glass or paper, and can also be worked into crown caps, and other various caps for glass bottles and other various containers. In particular, the materials of the present invention are, when worked into metal-made sealed containers, suited for storing liquid substances mainly composed of water, such as beer, juice or tea whereby deterioration and denaturation of the contents can be prevented during storage over a long period of time and the quality can be maintained.

In the present invention, as additives for enhancing the deoxidation ability, water-insoluble organic or inorganic substances in granular form may be dispersed into the hydrophilic coating layer or into the adhesive in cases where the adhesive is used, and polystyrene resin, styrene divinylbenzene resin, carbon black and silica sol are preferred examples for such substances, and among these styrene divinylbenzene and silica sol are most preferred.

Although the functional mechanism of these granular organic or inorganic substances to enhance the deoxidation ability is still to be clarified, it may be attributed to facts that these granular substances are present between the water-oxygen permeable film and the substrate metal, or between the hydrophilic film and the substrate metal, to form physical voids therein, or to occlude therein the water permeating the film from the exterior, providing improved water occlusion and promoting corrosion reaction with the substrate metal.

It is desirable that the above granular substances have a diameter ranging from 0.1 to 30$\mu$m, more preferably from 0.1 to 5$\mu$m, and that they are distributed in a density ranging from 10,000 particles/cm$^2$ to 500,000 particles/cm$^2$, more preferably from 20,000 particles/cm$^2$ to 100,000 particles/cm$^2$.

The present invention will be better understood from the following description of preferred embodiments. In the examples and comparative examples, "parts" and "%" are "parts by weight" and "% by weight", respectively.

Reference Example

A tinplate substrate (steel sheet with no tin coating) was degreased with ultrasonic waves given in toluene, and was heated at 200°C for 10 minutes to completely effect degrease. A composition comprising 1% hydroxyethyl cellulose aqueous solution was coated on the tinplate substrate in a dry layer thickness of 0.1 $\mu$m with a bar coater. By heat drying at 200°C for about 10 minutes, a hydrophilic coating layer was formed.

The coated plate thus obtained was used as a lid of a cylindrical glass container having a diameter of 65 mm and an inner volume of 350 m$\ell$, in which beer was charged to have a head space of approximately 24 m$\ell$. After passage of 30 hours at 20°C, the oxygen concentration in the head space and the oxygen concentration in beer were measured by gas chromatography.

Example 1

On the non-coated surface of a one-side tin coated steel sheet, a hydrophilic coating was applied in a similar way as in the reference example and additionally urethane adhesive (containing isocyanate curing agent) in such an amount to provide a dried film thickness of 1$\mu$m, heated at 195°C for one minute and immediately thereafter a film of polymethylpentene in 50$\mu$m thick was applied.

The double-layer coated steel sheet thus obtained was subjected to the same tests as in the Reference Example and the results are shown in Table 1.

Example 2

On the non-coated side of a one-side tin coated steel sheet, a hydrophilic coating same as in the Reference Example was applied, and additionally urethane adhesive composed of styrene divinylbenzene having a average particle diameter of 2.2$\mu$m (containing isocyanate curing agent) was applied in such an amount to provide a dried film of 1.0$\mu$m thick, then the coating was dried at 195°C for one minute and immediately thereafter a polymethylpentene film of 50$\mu$m was adhered thereon. The density of styrene divinyl benzene particles was 72,000 particles/cm$^2$.

The two-layer coated steel sheets thus obtained were subjected to the same tests as in the Reference Example. The results are shown in Table 1.

Comparative Example 1

A polyethylene layer (low density polyethylene, specific gravity of 0.920, oxygen permeation coefficient of 3.5 x 10$^{-10}$cm$^3$.cm/cm$^2$.sec.cmHg) having a thickness of 50 $\mu$m, which had been previously surface-treated with chromic acid was adhered onto the hydrophilic coating layer of the coated plate obtained in the Reference Example with heating under pressure. Thereafter the coated plate was quenched to form a dual coating layer of hydrophilic coating layer/oxygen- and moisture-permeable coating layer.

Using the coated plate thus obtained, a test was performed in a manner similar to the Reference Example.

The results are shown in Table 1.

Table 1

|  | Amount of O$_2$ in Head Space (mg/24 m$\ell$) | Amount of O$_2$ in Beer (ppm) |
|---|---|---|
| Example 1 | 0.02 | 0.015 |
| Example 2 | 0.01 | 0.01 |
| Comparative Example 1 | 0.03 | 0.02 |

Claims

1. A container material having a deoxidation function comprising a metallic base material reactive with oxygen, a hydrophilic coating layer formed on the surface of said metallic base material and an oxygen- and moisture-permeable coating layer formed on said hydrophilic coating layer, characterized in that said oxygen and moisture-permeable coating layer consists of polymethylpentene.

2. The material according to claim 1 wherein said hydrophilic coating layer comprises a cellulose derivative.

3. The material according to claim 1 or 2 wherein said metallic base material is a sheet material coated with a metal reactive with oxygen.

4. The material according to claim 3, in which the sheet material is a steel sheet, a tinplate, a nickel-plated steel sheet, a chrome-plated steel sheet, an aluminum sheet or a plastic sheet.

5. The material according to claim 3, in which the metal reactive with oxygen is Fe, Zn, or Mn.

6. The material according to any one of claims 1 to 5, wherein said hydrophilic coating layer contains styrene divinylbenzene resin, silica sol, polystyrene resin and/or carbon black as an auxiliary material for enhancing the deoxidation ability.

7. The material according to any one of claims 1 to 6, wherein said hydrophilic coating layer and said oxygen- and moisture-permeable coating are bonded together by an adhesive containing styrene divinylbenzene resin, silica sol, polystyrene resin and/or carbon black as an auxiliary material for enhancing the deoxidation ability.

8. A sealed container having a deoxidation function wherein at least part of said container is composed of the material as defined in any of claims 1 to 7.

9. A sealed container according to claim 8 in which said part of the container is the container body.

10. A sealed container according to claim 8 in which the part of the container is a lid or a cap.

Patentansprüche

1. Behältermaterial mit einer desoxidierenden Wirkung, welches ein mit Sauerstoff reagierendes metallisches Grundmaterial, eine auf der Oberfläche des metallischen Grundmaterials gebildete hydrophile Überzugsschicht und eine auf der hydrophilen Überzugsschicht gebildete sauerstoff- und feuchtedurchlässige Überzugsschicht aufweist, dadurch gekennzeichnet, daß die sauerstoff- und feuchtedurchlässige Überzugsschicht aus Polymethylpenten besteht.

2. Material nach Anspruch 1, wobei die hydrophile Überzugsschicht ein Zellulosederivat aufweist.

3. Material nach Anspruch 1 oder 2, wobei das metallische Grundmaterial ein Blechmaterial ist, welches mit einem Metall beschichtet ist, das mit Sauerstoff reagiert.

4. Material nach Anspruch 3, wobei das Blechmaterial ein Stahlblech, ein Weißblech, ein nickelbeschichtetes Stahlblech, ein chrombeschichtetes Stahlblech, ein Aluminiumblech oder eine Kunststoffbahn ist.

5. Material nach Anspruch 3, wobei das mit Sauerstoff reagierende Metall Fe, Zn oder Mn ist.

6. Material nach einem der Ansprüche 1 bis 5, wobei die hydrophile Überzugsschicht Styrol-Divinylbenzolharz, Siliziumdioxid-Sol, Polystyrolharz und/oder Rußschwarz als ein Hilfsmaterial zur Erhöhung der Desoxidationsfähigkeit enthält.

7. Material nach einem der Ansprüche 1 bis 6, wobei die hydrophile Überzugsschicht und die sauerstoff- und feuchtedurchlässige Beschichtung durch ein Klebemittel miteinander verbunden sind, welches Styrol-Divinylbenzolharz, Siliziumdioxid-Sol, Polystyrolharz und/oder Rußschwarz als ein Hilfsmaterial zur Erhöhung der Desoxidationsfähigkeit enthält.

8. Abgeschlossener Behälter mit desoxidierender Wirkung, wobei zumindest ein Teil des Behälters aus dem Material nach einem der Ansprüche 1 bis 7 besteht.

9. Abgeschlossener Behälter nach Anspruch 8, wobei das genannte Teil des Behälters der Behälterrumpf ist.

10. Abgeschlossener Behälter nach Anspruch 8, wobei das Teil des Behälters ein Deckel oder eine Kappe ist.

**Revendications**

1. Matière de récipient ayant une fonction de désoxydation comprenant une matière de base métallique réactive avec l'oxygène,
une couche de revêtement hydrophile formée sur la surface de ladite matière de base métallique et une couche de revêtement perméable à l'oxygène et à l'humidité formée sur ladite couche de revêtement hydrophile, caractérisée en ce que ladite couche de revêtement perméable à l'oxygène et à l'humidité est constituée de polyméthylpentène.

2. Matière selon la revendication 1, dans laquelle ladite couche de revêtement hydrophile comprend un dérivé de cellulose.

3. Matière selon la revendication 1 ou 2, dans laquelle ladite matière de base métallique est une tôle revêtue avec un métal réactif avec l'oxygène.

4. Matière selon la revendication 3, dans laquelle ladite tôle est une tôle d'acier, du fer blanc, une tôle d'acier nickelée, une tôle d'acier chromée, une tôle d'aluminium ou une feuille de plastique.

5. Matière selon la revendication 3, dans laquelle le métal réactif avec l'oxygène est Fe, Zn ou Mn.

6. Matière selon l'une quelconque des revendications 1 à 5, dans laquelle ladite couche de revêtement hydrophile contient une résine de styrène-divinylbenzène, un sol de silice, une résine de polystyrène et/ou du charbon actif en tant que matière auxiliaire pour augmenter la capacité de désoxydation.

7. Matière selon l'une quelconque des revendications 1 à 6, dans laquelle ladite couche de revêtement hydrophile et ledit revêtement perméable à l'oxygène et à l'humidité sont liés ensemble par un adhésif comprenant une résine de styrène-divinylbenzène, un sol de silice, une résine de polystyrène et/ou du charbon actif comme matière auxiliaire pour augmenter la capacité de désoxydation.

8. Récipient scellé ayant une fonction de désoxydation, dans lequel au moins une partie dudit récipient est composée de la matière telle que définie dans l'une quelconque des revendications 1 à 7.

9. Récipient scellé selon la revendication 8, dans lequel ladite partie du récipient est le corps du récipient.

10. Récipient scellé selon la revendication 8, dans lequel ladite partie du récipient est un couvercle ou une capsule.